# EUROPEAN PATENT APPLICATION

(11) **EP 4 325 062 A2**
(43) Date of publication of application: **21.02.2024**
(21) Application number: 23183092.8
(22) Date of filing: 03.07.2023
(51) Int. Cl.: F04D 29/32, B64C 27/473

(54) **COMPOSITE THERMOPLASTIC ROTOR BLADE WITH INTEGRAL CUFF**

(30) Priority: 01.07.2022 US 202217856557
(71) Applicant: Rohr, Inc., Chula Vista, CA 91910-2098 (US)
(72) Inventor: URSENBACH, Daniel O., El Cajon, 92019 (US); GRAY, Nathaniel M., Stratham, 03885 (US); FARR, Matthew A., San Diego, 92111 (US)
(74) Representative: Dehns

(57) **Abstract**

An apparatus is provided for rotational equipment. This apparatus includes a rotor blade (26) including an airfoil body (36), a spar structure (38) and a cuff (40). The airfoil body (36) extends spanwise from a base (44) to a tip (46). The airfoil body (36) extends longitudinally (e.g., chordwise) from a leading edge (50) to a trailing edge (52). The airfoil body (36) extends laterally between a first side (54) and a second side (56). The spar structure (38) extends spanwise within and supports the airfoil body (36). The cuff (40) projects out from the spar structure (38) and away from the base (44) of the airfoil body (36). The cuff (40) is formed integral with the spar structure (38). The cuff (40) and the spar structure (38) are configured from or otherwise include thermoplastic material.

## Description

### BACKGROUND

### 1. Technical Field

This disclosure relates generally to a rotor and, more particularly, to a composite rotor blade and methods for forming the composite rotor blade.

### 2. Background Information

Various types and configurations of rotors are known in the art such as, for example, helicopter rotors and propellers. Such a rotor includes a plurality of rotor blades distributed circumferentially about and connected to a rotor hub or disk. Various types and configurations of rotor blades are known in the art. While these known rotor blades have various benefits, there is still room in the art for improvement. There is a need in the art, in particular, for rotor blade designs and manufacturing techniques which facilitate quicker and less expensive rotor blade manufacturing.

### SUMMARY OF THE DISCLOSURE

According to an aspect of the present disclosure, an apparatus is provided for rotational equipment. This apparatus includes a rotor blade including an airfoil body, a spar structure and a cuff. The airfoil body extends spanwise from a base to a tip. The airfoil body extends longitudinally (e.g., chordwise) from a leading edge to a trailing edge. The airfoil body extends laterally between a first side and a second side. The spar structure extends spanwise within and supports the airfoil body. The cuff projects out from the spar structure and away from the base of the airfoil body. The cuff is formed integral with the spar structure. The cuff and the spar structure are configured from or otherwise include thermoplastic material.

According to another aspect of the present disclosure, a formation method is provided. During this formation method, a preform of thermoplastic material is provided. The preform of thermoplastic material is thermoformed to form a spar structure and a cuff integral with the spar structure. An airfoil body is formed that extends spanwise from a base to a tip, longitudinally (e.g., chordwise) from a leading edge to a trailing edge and laterally between a first side and a second side. The forming includes: consolidating a first side skin, a second side skin and a leading edge skin with the spar structure, the first side skin at least partially forming the first side, the second side skin at least partially forming the second side, and the leading edge skin at least partially forming the leading edge; and consolidating the first side skin with the second side skin at the trailing edge.

According to still another aspect of the present disclosure, another formation method is provided. During this formation method, a rotor blade is formed that includes an airfoil body and a spar structure. The airfoil body extends spanwise from a base to a tip. The airfoil body extends longitudinally (e.g., chordwise) from a leading edge to a trailing edge. The airfoil body extends laterally between a first side and a second side. The spar structure extends spanwise within and supports the airfoil body. The forming of the rotor blade includes: arranging a plurality of plies of thermoplastic material together to provide a laminate preform; pinning the laminate preform to a first tool; and consolidating the laminate preform to form an element of the rotor blade, the consolidating comprising heating the laminate preform and pressing the heated laminate preform between the first tool and a second tool. At least a first of the plies of thermoplastic material may slip relative to a second of the plies of thermoplastic material during the pressing.

The rotor blade may also include a cuff formed integral with and projecting out from the spar structure.

The spar structure may include a first spar, a second spar and a web. The first spar may be within the airfoil body at the first side. The second spar may be within the airfoil body at the second side. The web may extend laterally between and may be connected to the first spar and the second spar.

The formation method may also include: arranging a support tool adjacent the web and laterally between the first spar and the second spar, the support tool including one or more inflatable bladders; supporting the spar structure during the consolidating with the support tool; and removing the support tool after the forming of the airfoil body.

The support tool may be designed to mechanically collapse to facilitate removal of the support tool.

The apparatus may also include a rotor hub including a mount. The cuff may be fastened to the mount and attach the rotor blade to the rotor hub.

The cuff may include a first flange and a second flange laterally separated from the first flange by a channel.

A first aperture may extend laterally through the first flange. A second aperture may extend laterally through the second flange and may be coaxial with the first aperture.

The thermoplastic material may include a thermoplastic matrix and fiber reinforcement embedded within the thermoplastic matrix.

The fiber reinforcement may include a plurality of fibers. Each of the fibers may extend within the spar structure and the cuff.

The spar structure may include a first spar, a second spar and a web. The first spar may be within the airfoil body and extend spanwise along the first side. The second spar may be within the airfoil body and extend spanwise along the second side. The web may extend laterally between and may be connected to the first spar and the second spar.

The spar structure may include a first side skin, a second side skin and a leading edge skin. The first side skin may form the first side and may be connected to the first spar. The second side skin may form the second side and may be connected to the second spar. The second skin may meet the first skin at the trailing edge. The leading edge skin may form the leading edge and may extend between the first side skin and the second side skin.

The first side skin may be formed integral with the first spar. The second side skin may be formed integral with the second spar.

The first side skin may be connected to the first spar at a first splice joint. The second side skin may be connected to the second spar at a second splice joint.

The first spar may be configured from or otherwise include a first thermoplastic material. The first side skin may be configured from or otherwise include a second thermoplastic material with a lower melting point than the first thermoplastic material.

The leading edge skin may be fused to the first spar and the second spar.

The leading edge skin may be connected to the first spar at a first splice joint. The leading edge skin may be connected to the second spar at a second splice joint.

The airfoil body may be configured from or otherwise include thermoplastic material. The spar structure may be fused to the airfoil body.

The apparatus may also include a guard on the airfoil body at the leading edge.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a rotor for an aircraft propulsion system.
FIG. 2 is a schematic illustration of a rotor blade.
FIG. 3 is a cross-sectional schematic illustration of the rotor blade taken along line 3-3 in FIG. 2.
FIG. 4 is a partial sectional schematic illustration of a skin for the rotor blade.
FIGS. 5A-C are partial sectional schematic illustrations of various joints between the skin and an internal spar.
FIGS. 6A and 6B are partial sectional schematic illustrations of various interfaces between multiple skins and the spar.
FIG. 7 is a partial sectional schematic illustration of a spar structure integral with a cuff.
FIG. 8 is a partial sectional illustration of the spar structure and the cuff taken along line 8-8 in FIG. 2.
FIG. 9 is a partial sectional illustration of the spar structure and the cuff taken along line 9-9 in FIG. 2.
FIG. 10 is a flow diagram of a method for forming a rotor blade.
FIGS. 11A and 11B are schematic illustrations of various preforms of thermoplastic material.
FIG. 12 is a perspective illustration of a spar-cuff structure.
FIG. 13 is a sectional schematic illustration of the rotor blade arranged with a support tool during formation.
FIG. 14 is a flow diagram of a method for forming one or more components of the rotor blade.
FIGS. 15A-D are sectional schematic illustrations depicting the formation of one or more rotor blade components.

### DETAILED DESCRIPTION

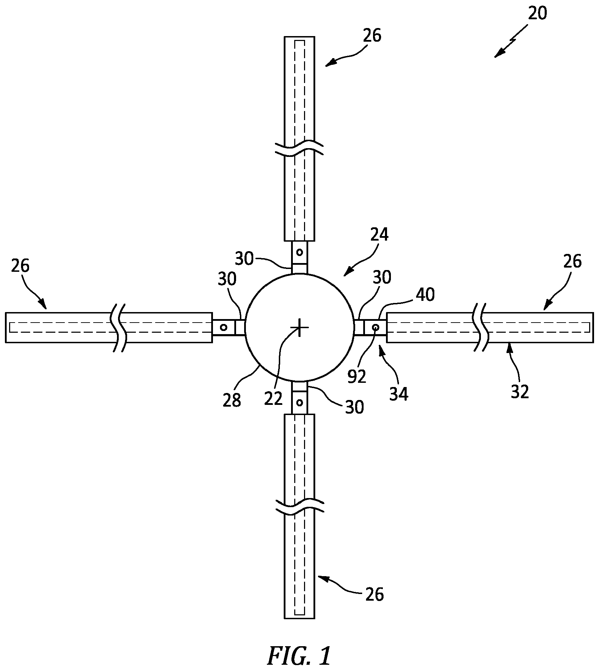

FIG. 1 illustrates a rotor 20 for an aircraft propulsion system. This rotor 20 may be configured as a helicopter rotor (e.g., a main rotor) where the aircraft propulsion system may include, for example, a turboshaft gas turbine engine for driving rotation of the helicopter rotor. The rotor 20 may alternatively be configured as a propeller where the aircraft propulsion system may include, for example, a turboprop gas turbine engine for driving rotation of the propeller. The present disclosure, however, is not limited to such exemplary rotor configurations nor to aircraft propulsion system applications. The rotor 20, for example, may alternatively be configured as a fan where the aircraft propulsion system may include, for example, a turbofan gas turbine engine for driving rotation of the fan. In another example, the rotor 20 may still alternatively be configured as a turbine rotor for a wind turbine.

The rotor 20 is rotatable about a rotational axis 22, which rotational axis 22 is also a centerline of the rotor 20. The rotor 20 includes a rotor hub 24 (or disk) and a plurality of rotor blades 26; e.g., helicopter blades, propeller blades, etc.

The rotor hub 24 of FIG. 1 includes a hub base 28 and a plurality of hub mounts 30. The hub mounts 30 are distributed circumferentially about the hub base 28 and the rotational axis 22. Each of the hub mounts 30 is connected to (e.g., formed integral with or otherwise attached to) the hub base 28. Each of the hub mounts 30 projects radially out from (relative to the rotational axis 22) the hub base 28 to a distal end (not visible in FIG. 1) of the respective hub mount 30.

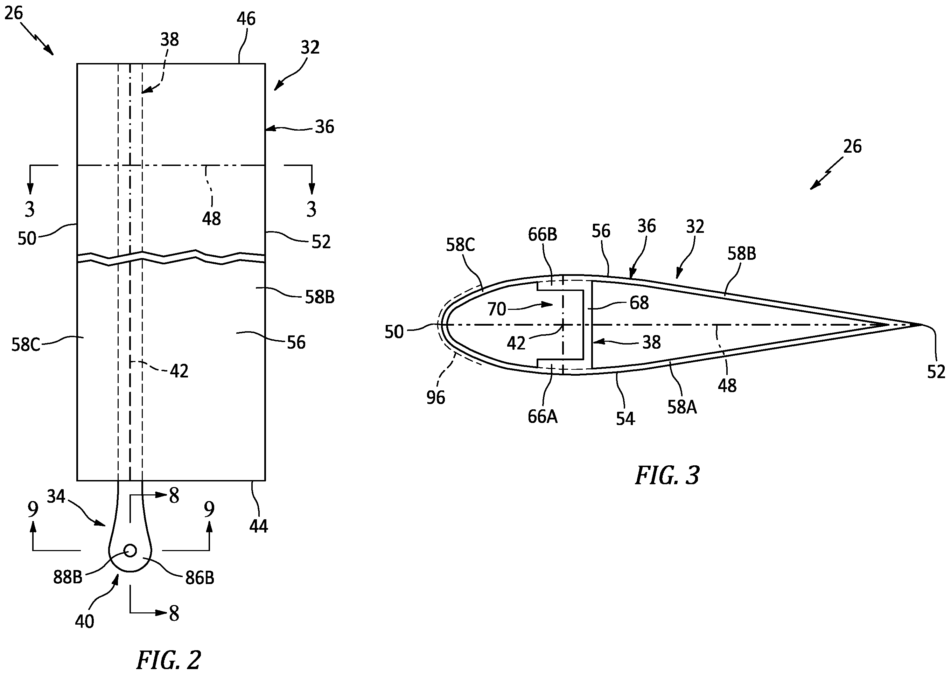

Each of the rotor blades 26 includes a rotor blade airfoil 32 and a rotor blade mounting structure 34. Referring to FIGS. 2 and 3, the blade airfoil 32 includes an airfoil body 36 and an internal spar structure 38. The blade mounting structure 34 includes a blade cuff 40 (see also FIG. 1). Briefly, the airfoil body 36, the spar structure 38 and the blade cuff 40 may be formed and/or fused integrally together as a single, unitary thermoplastic composite body as described below in further detail.

The blade airfoil 32 and its airfoil body 36 of FIG. 2 extend spanwise along a span line 42 of the blade airfoil 32 between and to a base 44 of the blade airfoil 32 and a (e.g., unsupported, unshrouded) tip 46 of the blade airfoil 32. The blade airfoil 32 and its airfoil body 36 of FIGS. 2 and 3 extend longitudinally along a camber line 48 of the blade airfoil 32 between and to a leading edge 50 of the blade airfoil 32 and a trailing edge 52 of the blade airfoil 32. The blade airfoil 32 and its airfoil body 36 of FIG. 3 extend laterally (e.g., perpendicular to the camber line 48 and the span line 42) between and to a first (e.g., pressure) side 54 of the blade airfoil 32 and a second (e.g., suction) side 56 of the blade airfoil 32. The airfoil body 36 of FIGS. 2 and 3 includes a first side skin 58A, a second side skin 58B and a leading edge skin 58C, which airfoil skins 58A-C (generally referred to as "58") may collectively form an exterior aerodynamic shell about the spar structure 38.

The first side skin 58A forms an aft portion of the airfoil first side 54. This first side skin 58A extends longitudinally along the airfoil first side 54 from (or about) a first end of the leading edge skin 58C to (or about) the airfoil trailing edge 52. The first side skin 58A extends spanwise from the airfoil base 44 to the airfoil tip 46.

The second side skin 58B forms an aft portion of the airfoil second side 56. This second side skin 58B extends longitudinally along the airfoil second side 56 from (or about) a second end of the leading edge skin 58C to (or about) the airfoil trailing edge 52. The second side skin 58B extends spanwise from the airfoil base 44 to the airfoil tip 46. The second side skin 58B may meet and may be connected (e.g., fused with) the first side skin 58A at (e.g., on, adjacent or proximate) and/or along the airfoil tip 46 and/or the airfoil trailing edge 52.

The leading edge skin 58C extends circumferentially about the span line 42 (or another spanwise extending axis) between and to its first end and its second end. More particularly, the leading edge skin 58C extends circumferentially about the span line 42 (or another spanwise extending axis) to (or about) the first side skin 58A and/or the second side skin 58B. The leading edge skin 58C may have a curved (e.g., arcuate, splined, U-shaped, etc.) or otherwise convex (e.g., V-shaped) cross-sectional geometry when viewed, for example, in a reference plane perpendicular to the span line 42; e.g., the plane of FIG. 3. The leading edge skin 58C extends spanwise from the airfoil base 44 to the airfoil tip 46. With this arrangement, the leading edge skin 58C forms the airfoil leading edge 50 as well as partially forms a forward portion of the airfoil first side 54 and a forward portion of the airfoil second side 56.

The leading edge skin 58C may be configured with an internal counterweight (not shown). Alternatively, the counterweight may be affixed to an interior or an exterior of the leading edge skin 58C and/or another component of the airfoil body 36. Still alternatively, the blade airfoil 32 may be configured without a counterweight in certain applications.

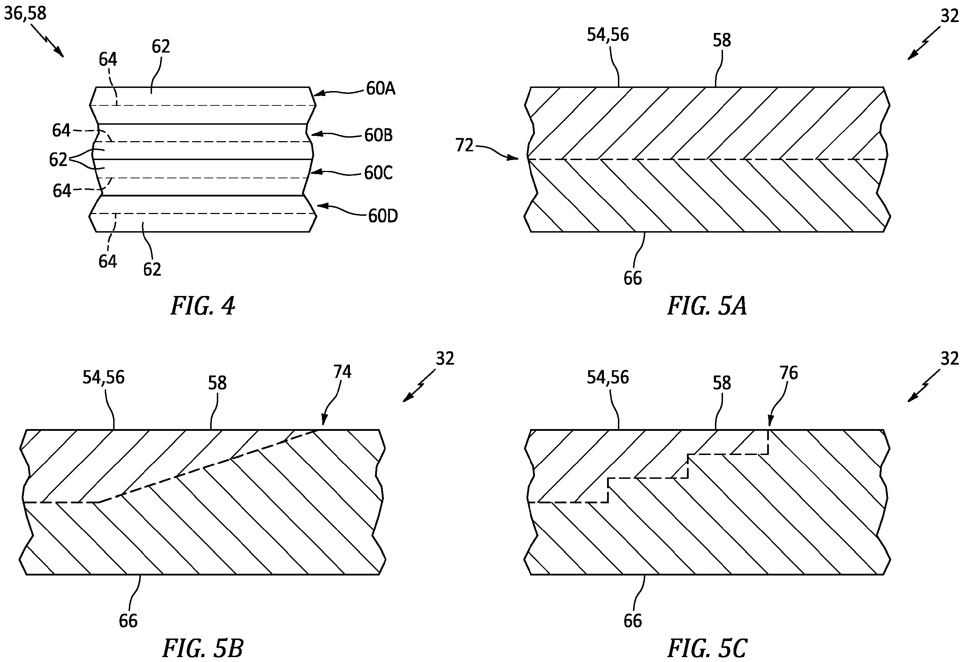

The airfoil body 36 is a fiber-reinforced composite structure. The airfoil body 36 of FIG. 4, for example, is formed from one or more body layers 60 (e.g., 60A-D) stacked and consolidated together in a laminate. Each of these body layers 60 includes a thermoplastic matrix 62 and fiber reinforcement 64 embedded within and/or impregnated by the body thermoplastic matrix 62. Examples of the body thermoplastic matrix 62 include, but are not limited to, polyaryletherketone (PAEK) (e.g., low melt polyaryletherketone (LM-PAEK)), polyether ether ketone (PEEK), polyether ketone ketone (PEKK) and polyphenylene sulfide (PPS). The body fiber reinforcement 64 may include a plurality of fibers, which fibers may be long strand fibers, continuous fibers, etc. Examples of the body fiber reinforcement 64 may include, but are not limited to, fiberglass, carbon fibers and aramid (e.g., Kevlar^{®}) fibers.

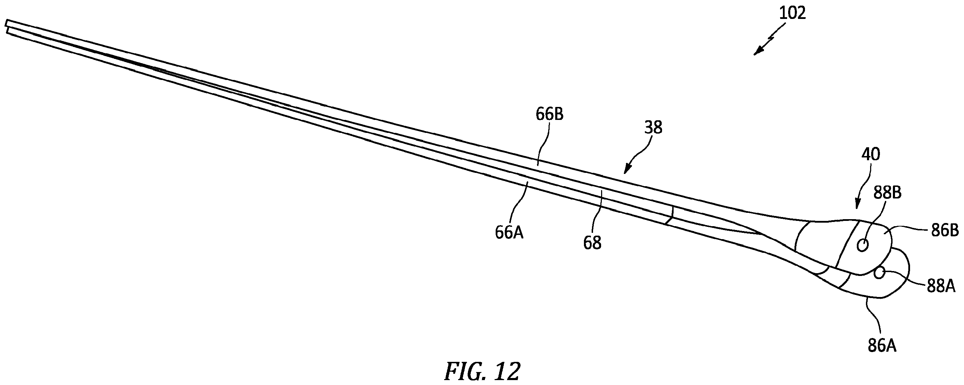

Referring to FIGS. 2 and 3, the spar structure 38 is arranged internally within the airfoil body 36. This spar structure 38 is configured to provide an internal support structure (e.g., a backbone and/or a frame) for the blade airfoil 32. The spar structure 38 of FIG. 3 includes a first spar 66A, a second spar 66B and a web 68 (see also FIG. 12).

The first spar 66A is disposed at the airfoil first side 54. This first spar 66A structurally supports a first portion of the airfoil body 36 along the airfoil first side 54, which body first portion may include the first side skin 58A and/or the leading edge skin 58C. The first spar 66A of FIG. 3 (e.g., spanwise and longitudinally) overlaps the first side skin 58A and the leading edge skin 58C. The first spar 66A of FIG. 3 is also (e.g., laterally) abutted against, engaged with (e.g., contacts) and connected to (e.g., formed integral with or otherwise bonded to) the first side skin 58A and the leading edge skin 58C. This first spar 66A may extend longitudinally along a (e.g., minor) intermediate portion of the airfoil first side 54. The first spar 66A extends spanwise along at least a (e.g., major) portion or an entirety of a span of the blade airfoil 32 and its airfoil body 36 (see FIG. 2). The first spar 66A has a lateral thickness that may be different (e.g., greater) than or equal to a lateral thickness of the first side skin 58A and/or a lateral thickness of the leading edge skin 58C.

The second spar 66B is disposed at the airfoil second side 56. This second spar 66B structurally supports a second portion of the airfoil body 36 along the airfoil second side 56, which body second portion may include the second side skin 58B and/or the leading edge skin 58C. The second spar 66B of FIG. 3 (e.g., spanwise and longitudinally) overlaps the second side skin 58B and the leading edge skin 58C. The second spar 66B of FIG. 3 is also (e.g., laterally) abutted against, engaged with (e.g., contacts) and connected to (e.g., formed integral with or otherwise bonded to) the second side skin 58B and the leading edge skin 58C. This second spar 66B may extend longitudinally along a (e.g., minor) intermediate portion of the airfoil second side 56. The second spar 66B extends spanwise along at least a (e.g., major) portion or the entirety of the span of the blade airfoil 32 and its airfoil body 36 (see FIG. 2). The second spar 66B has a lateral thickness that may be different (e.g., greater) than or equal to a lateral thickness of the second side skin 58B and/or the lateral thickness of the leading edge skin 58C. This second spar thickness may be equal to the first spar thickness; however, the present disclosure is not limited to such an exemplary dimensional relationship.

The web 68 is arranged laterally between the first spar 66A and the second spar 66B. The web 68 of FIG. 3, in particular, extends laterally between and to the first spar 66A and the second spar 66B. The web 68 of FIG. 3 is connected to (e.g., formed integral with or otherwise bonded to) the first spar 66A and the second spar 66B. The web 68 extends spanwise along at least a (e.g., major) portion or an entirety of each spar. The web 68 may be disposed at an aft end of the first spar 66A and an aft end of the second spar 66B towards the airfoil trailing edge 52. With this arrangement, the first spar 66A, the second spar 66B and the web 68 provide the spar structure 38 with a channeled geometry. More particularly, the spar structure 38 of FIG. 3 includes an internal channel 70 which extends laterally, along the web 68, between and to the first spar 66A and the second spar 66B. This internal channel 70 may also extend spanwise through (or partially within) the spar structure 38; e.g., the internal channel 70 may be spanwise open ended or closed ended. The web 68 has a lateral thickness that may be different (e.g., greater or less) than or equal to the lateral thickness of the first spar 66A or the second spar 66B.

Each spar 66 interfaces with a respective side skin 58A, 58B and/or the leading edge skin 58C at a respective joint; e.g., see FIGS. 5A-C. Referring to FIG. 5A, this joint may be a simple overlap joint 72 (e.g., a lap joint) where the skin 58 overlaps an exterior surface of the spar 66. Referring to FIG. 5B, the joint may alternatively be a scarf joint 74 where the skin 58 is seated in a pocket in the spar 66 and a tapered end of the skin 58 abuts against a tapered surface of the spar 66. Referring to FIG. 5C, the joint may still alternatively be a stepped lap joint 76 where the skin 58 is seated in a pocket in the spar 66 and a stepped end of the skin 58 abuts against a stepped surface of the spar 66. Of course, various other types of interfaces are known in the art, and the present disclosure is not limited to any particular ones thereof.

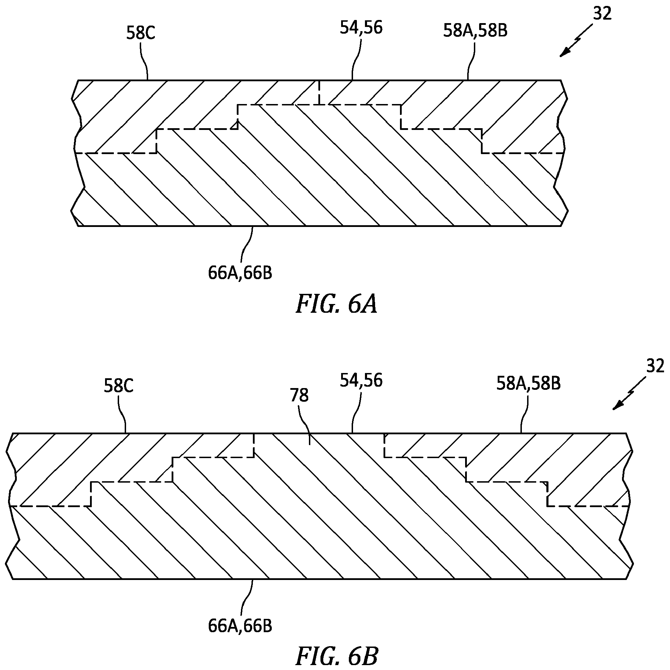

Referring to FIG. 6A, the leading edge skin 58C maybe longitudinally abutted against and may be connected to the respective side skin 58A, 58B (along the respective spar 66A, 66B). The airfoil skins 58 may thereby (e.g., completely) cover the spar structure 38 and its respective spar 66. Alternatively, referring to FIG. 6B, the leading edge skin 58C and the respective side skin 58A, 58B may be abutted against and may be connected to an intermediate portion 78 of the spar structure 38 and its respective spar 66A, 66B. This intermediate portion 78 of FIG. 6B longitudinally separates the leading edge skin 58C from the respective side skin 58A, 58B. The intermediate portion 78 may also be exposed and form an intermediate portion of the respective airfoil side 54, 56.

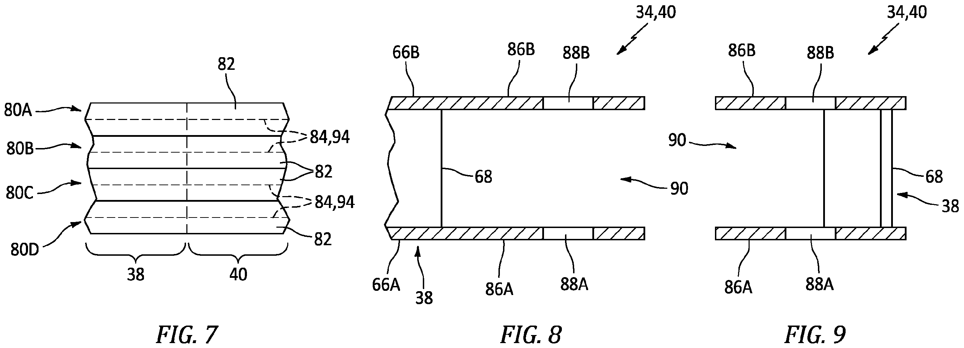

Referring to FIG. 7, the spar structure 38 is a fiber-reinforced composite structure. The spar structure 38 of FIG. 7, for example, is formed from one or more structure layers 80 (e.g., 80A-D) stacked together in a laminate. Each of these structure layers 80 includes a thermoplastic matrix 82 and fiber reinforcement 84 embedded within and/or impregnated by the structure thermoplastic matrix 82. Examples of the structure thermoplastic matrix 82 include, but are not limited to, polyaryletherketone (PAEK) (e.g., low melt polyaryletherketone (LM-PAEK)), polyether ether ketone (PEEK), polyether ketone ketone (PEKK) and polyphenylene sulfide (PPS). This structure thermoplastic matrix 82 and the body matrix material 62 (see FIG. 4) may be a common (e.g., the same) thermoplastic material. Alternatively, the structure thermoplastic matrix 82 may be a different material than the body matrix material 62. For example, the structure thermoplastic matrix 82 may be a thermoplastic with a higher melting point temperature than the body thermoplastic matrix 62 such that, for example, the airfoil body 36 and its components 58A-C of FIG. 3 may be bonded (e.g., fused) to or otherwise consolidated with the spar structure 38 without thermally deforming the spar structure 38. The structure fiber reinforcement 84 of FIG. 7 may include a plurality of fibers, which fibers may be long strand fibers, continuous fibers, etc. Examples of the structure fiber reinforcement 84 may include, but are not limited to, fiberglass, carbon fibers and aramid (e.g., Kevlar^{®}) fibers. This structure fiber reinforcement 84 and the body fiber reinforcement 64 (see FIG. 4) may be a common material or a different material.

Referring to FIG. 2, the blade cuff 40 is connected to (e.g., formed integral with) the spar structure 38 (see also FIG. 12). The blade cuff 40 of FIG. 2 projects spanwise out from a base end of the spar structure 38 and spanwise away from the airfoil base 44. The blade cuff 40 of FIG. 2, more particularly, is located at the airfoil base 44 and outside of (e.g., next to) the blade airfoil 32 and its airfoil body 36.

Referring to FIGS. 8 and 9, the blade cuff 40 may include one or more flanges 86A and 86B (generally referred to as "86"). The first flange 86A is located towards the airfoil first side 54 (see FIGS. 2 and 3) and may be a (e.g., reinforced) continuation of material forming the first spar 66A. This first flange 86A may include at least one first fastener aperture 88A (e.g., a bolt hole) (or a pattern of first fastener apertures 88A) which projects laterally through the first flange 86A. The second flange 86B is located towards the airfoil second side 56 (see FIGS. 2 and 3) and may be a (e.g., reinforced) continuation of material forming the second spar 66B. This second flange 86B may include at least one second fastener aperture 88B (e.g., a bolt hole) (or a pattern of second fastener apertures 88B) which projects laterally through the second flange 86B. The second fastener aperture 88B may be coaxial with the first fastener aperture 88A.

The second flange 86B is laterally separated from the first flange 86A by a cuff channel 90. The cuff channel 90 extends laterally within the blade mounting structure 34 between the first flange 86A and the second flange 86B. The cuff channel 90 extends spanwise into the blade mounting structure 34. The cuff channel 90 extends longitudinally through the blade mounting structure 34.

Referring to FIG. 1, each blade cuff 40 is configured to mate with a respective one of the hub mounts 30. Each cuff channel 90 (see FIGS. 8 and 9), for example, may receive a respective one of the hub mounts 30. This hub mount 30 may be mechanically fastened to the blade cuff 40 with at least one fastener 92 (e.g., a bolt) mated with and projecting through the fastener apertures 88A and 88B (see FIGS. 8 and 9) and a fastener aperture in the hub mount 30. Each blade cuff 40 may thereby couple the respective rotor blade 26 to the rotor hub 24.

The blade cuff 40 may be formed from the same material as the spar structure 38. With such a construction, referring to FIG. 7, one or more fibers 94 of the structure fiber-reinforcement 84 may extend in both the spar structure 38 and the blade cuff 40. Spanning these fibers 94 into the thermoplastic matrix 82 of both the spar structure 38 and the blade cuff 40 may increase a structural integrity of a connection (e.g., a transition) between the spar structure 38 and the blade cuff 40. Furthermore, forming the spar structure 38 and the blade cuff 40 from common material may simplify manufacturing of the rotor blade 26.

Referring to FIGS. 2 and 3, in some embodiments, the airfoil body 36 may (e.g., completely) define the exterior surface(s) of the blade airfoil 32. In other embodiments, referring to FIG. 3, the blade airfoil 32 may also include an erosion and/or another type of protective guard 96 (see dashed line); e.g., an erosion resistant layer or coating. This guard 96 may cover and thereby protect (e.g., provide a buffer for) at least a portion of the leading edge skin 58C at and about the airfoil leading edge 50.

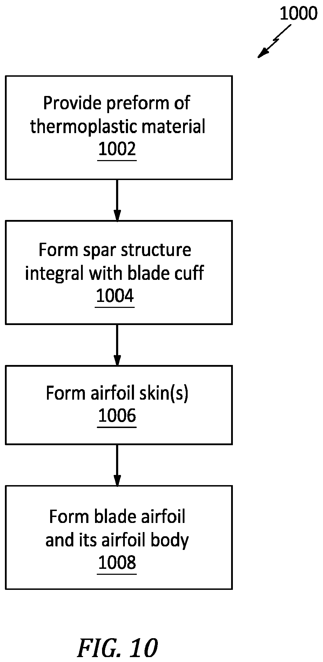

FIG. 10 is a flow diagram of a method 1000 for forming a rotor blade. For ease of description, the formation method 1000 is described below with reference to the rotor blade 26. The formation method 1000 of the present disclosure, however, is not limited to any particular rotor blade types or configurations.

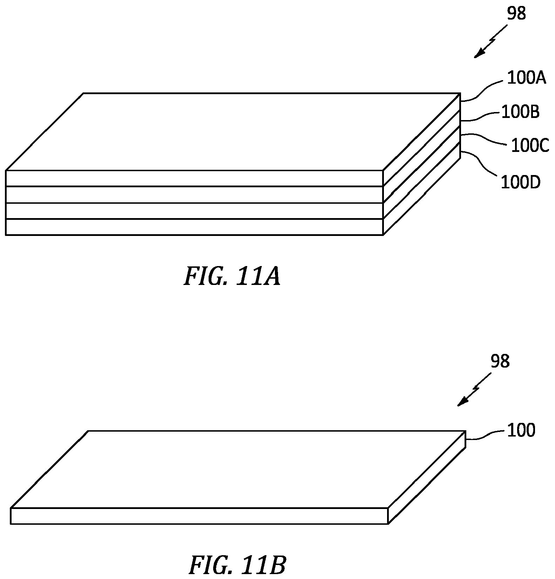

In step 1002, referring to FIGS. 11A and 11B, a preform 98 of fiber-reinforced thermoplastic material is provided. Referring to FIG. 11A, the preform 98 may include a plurality of layers 100 (e.g., 100A-D) (e.g., a multi-ply sheet) of the fiber-reinforced thermoplastic material arranged in a stack. Alternatively, referring to FIG. 11B, the preform 98 may be a layer 100 (e.g., a single ply sheet) of the fiber-reinforced thermoplastic material. Each preform layer 100 of FIGS. 11A and 11B includes the structure fiber reinforcement 84 embedded within the structure thermoplastic matrix 82 (see FIG. 7). The preform layers 100 may be discrete from one another. Alternatively, the preform layers 100 may be tacked together. Still alternatively, the preform layers 100 may be consolidated together to form the preform 98 of fiber-reinforced thermoplastic material as a laminate. Regardless of the preform construction, the preform 98 of fiber-reinforced thermoplastic material may be in a form of a substantially flat sheet or plate. The present disclosure, however, is not limited to such an exemplary geometry.

In step 1004, the preform 98 of fiber-reinforced thermoplastic material is shaped, cut and/or otherwise formed to form the spar structure 38 and the blade cuff 40 as a single, unitary body; e.g., a monolithic body. The preform 98 of fiber-reinforced thermoplastic material, for example, may be thermoformed and subsequently trimmed to provide a spar-cuff structure 102 as shown, for example, in FIG. 12. During the thermoforming, the preform 98 of fiber-reinforced thermoplastic material may be shaped and twisted while heated to an elevated temperature. In addition, the preform layers 100 may also be (e.g., completely) consolidated together under the elevated heat and elevated pressure as needed during this formation step 1004. The present disclosure, however, is not limited to such an exemplary formation technique. For example, the spar structure 38 and/or the blade cuff 40 may also or alternatively be formed using stamp forming, hand laying or automated fiber / tape placement (AFP / ATP) followed by consolidation (e.g., in an autoclave), compression molding, press molding, etc.

The steps 1002 and 1004 are described above with respect to forming a complete spar-cuff structure 102. However, in other embodiments, the steps 1002 and 1004 may be repeated to form various (e.g., spanwise) segments of the spar-cuff structure 102, which structure segments may then be joined (e.g., welded or otherwise fused) together to form the complete spar-cuff structure 102.

In step 1006, each of the airfoil skins 58A-C is formed. Each of these skins 58 may be formed using a similar thermoforming process as described above with respect to the forming of the spar-cuff structure 102. The present disclosure, however, is not limited to such exemplary formation techniques. For example, one or more of the airfoil skins 58 may also or alternatively be formed using stamp forming, hand laying or automated fiber / tape placement (AFP / ATP) followed by consolidation (e.g., in an autoclave), compression molding, press molding, etc.

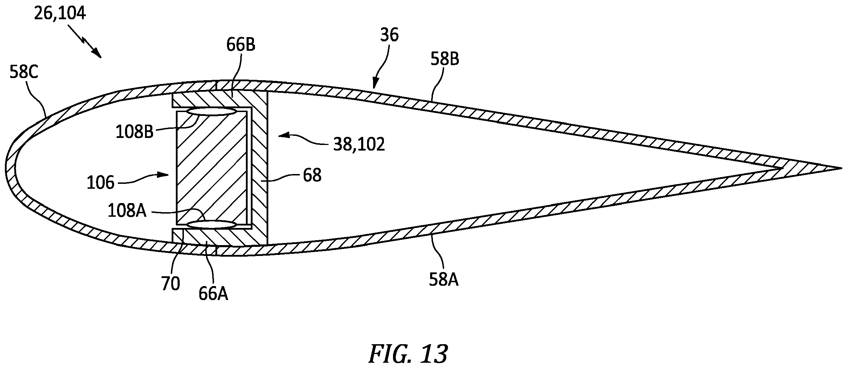

In step 1008, the blade airfoil 32 and its airfoil body 36 are formed. For example, referring to FIG. 13, the airfoil components 38 and 58A-C may be arranged together to form a preform 104 of the blade airfoil 32. To support the airfoil preform 104, a support tool 106 may be provided. This support tool 106 is mated with the spar structure 38. The support tool 106, for example, may be inserted into the internal channel 70 such that the support tool 106 is adjacent the web 68 and laterally between the first spar 66A and the second spar 66B. The support tool 106 may include one or more inflatable bladders 108A and 108B (generally referred to as "108"). The first bladder 108A may be abutted laterally against the first spar 66A and inflated to support and maintain a position of the first spar 66A. The second bladder 108B may be abutted laterally against the second spar 66B inflated to support and maintain a portion of the second spar 66B. The airfoil skins 58 may then be bonded (e.g., welded or otherwise fused) to the spar structure 38. The first side skin 58A and the second side skin 58B may also be bonded (e.g., welded or otherwise fused) to one another at the airfoil trailing edge 52. The bonding / the assembling may be performed by heat welding, vibration welding, resistance welding, induction welding, ultrasonic welding or laser welding. The present disclosure, however, is not limited to the foregoing exemplary welding techniques. Furthermore, it is contemplated the airfoil components 38 and 58A-C may alternatively be heated under pressure to consolidate the airfoil components together in, for example, an autoclave.

Following the bonding / consolidating of the airfoil components 38 and 58A-C together to form the blade airfoil 32 and its airfoil body 36, the support tool 106 may be removed. One or more of the inflatable bladders 108, for example, may be partially or complete deflated to relieve pressure against the first spar 66A and/or the second spar 66B. In addition or alternatively, the entire support tool 106 or a base of the support tool 106 between the inflatable bladders 108 may be configured to mechanically collapse (e.g., fold, bend, retract, nest, etc.) to facilitate the removal of the support tool 106. The support tool 106 may then be slide out of an interior of the blade airfoil 32.

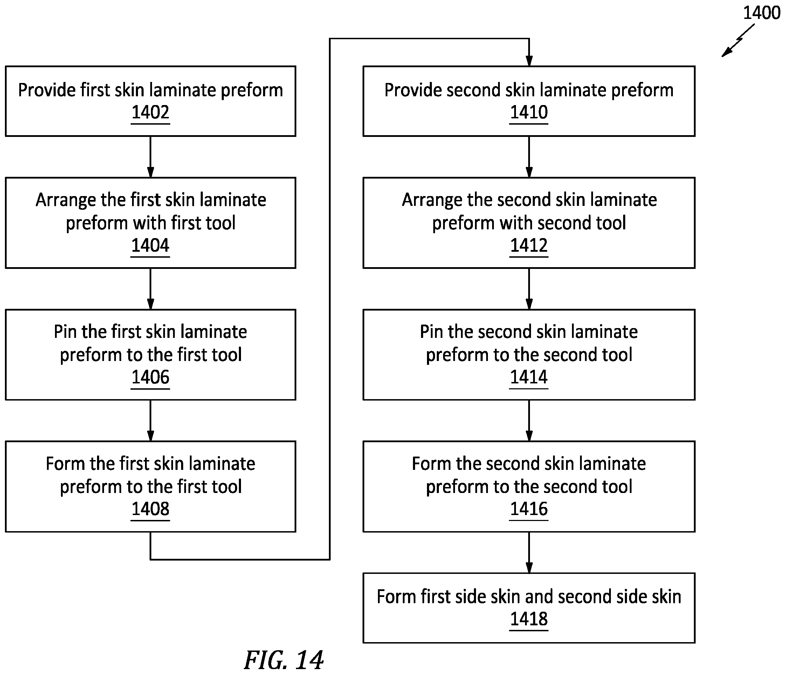

FIG. 14 is a flow diagram of a method 1400 for forming one or more of the airfoil components individually or collectively, which formation method 1400 may be used in conjunction with or separately from the formation method 1000. For ease of description, the formation method 1400 is described with respect to forming the first side skin 58A and the second side skin 58B.

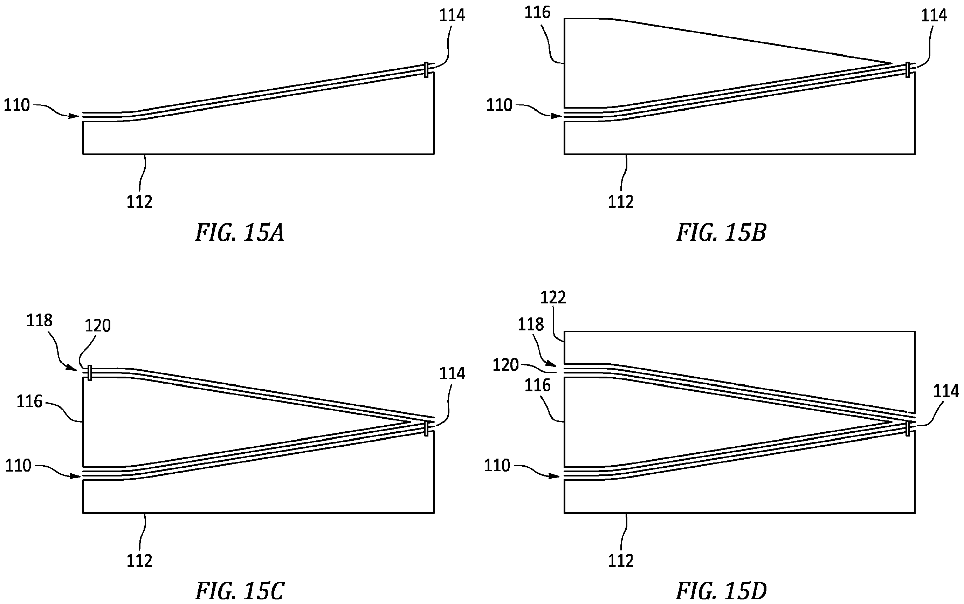

In step 1402, referring to FIG. 15A, a plurality of plies of fiber-reinforced thermoplastic material are arranged together to provide a first skin laminate preform 110. The plies of this first skin laminate preform 110 may be discrete from one another, or tacked together. Of course, the plies of the first skin laminate preform 110 may alternatively be consolidated together in certain other embodiments.

In step 1404, the first skin laminate preform 110 is arranged with a first tool 112; e.g., a die, a form, etc.

In step 1406, the first skin laminate preform 110 is pinned or otherwise attached to the first tool 112. The first skin laminate preform 110, for example, may be pinned to the first tool 112 at an end 114 which will eventually form (or be proximate) the airfoil trailing edge 52 (see FIGS. 2 and 3). Other areas of the plies in the first skin laminate preform 110, by contrast, may be free to move relative to the first tool 112.

In step 1408, referring to FIG. 15B, the first skin laminate preform 110 is formed to the first tool 112. A second tool 116 (e.g., a mandrel, a core, etc.), for example, may be heated and pressed against the first skin laminate preform 110 such that the first skin laminate preform 110 is pressed (e.g., compressed, sandwiched, etc.) between the first tool 112 and the second tool 116. Note, as the heated first skin laminate preform 110 is pressed against the first tool 112 by the heated second tool 116, the various plies of fiber-reinforced thermoplastic material may shift (e.g., slide) relative to one another such that the first skin laminate preform 110 does not kink or otherwise disform.

In step 1410, referring to FIG. 15C, a plurality of plies of fiber-reinforced thermoplastic material are arranged together to provide a second skin laminate preform 118. The plies of this second skin laminate preform 118 may be discrete from one another, or tacked together. Of course, the plies of the second skin laminate preform 118 may alternatively be consolidated together in certain other embodiments.

In step 1412, the second skin laminate preform 118 is arranged with the second tool 116.

In step 1414, the second skin laminate preform 118 is pinned or otherwise attached to the second tool 116. The second skin laminate preform 118, for example, may be pinned to the second tool 116 at a forward end 120; e.g., opposite the end 114. Other areas of the plies in the second skin laminate preform 118, by contrast, may be free to move relative to the second tool 116 and the first skin laminate preform 110.

In step 1416, referring to FIG. 15D, the second skin laminate preform 118 is formed to the second tool 116 and the first tool 112 at the end 114. A third tool 122 (e.g., a die, a form, etc.), for example, may be heated and pressed against the second skin laminate preform 118 such that the second skin laminate preform 118 is pressed (e.g., compressed, sandwiched, etc.) between the second tool 116 / the first tool 112 and the third tool 122. Note, as the heated second skin laminate preform 118 is pressed against the tool(s) 112 and/or 116 by the heated third tool 122, the various plies of fiber-reinforced thermoplastic material may shift (e.g., slide) relative to one another such that the second skin laminate preform 118 does not kink or otherwise disform.

In step 1418, the first side skin 58A and the second side skin 58B are formed. The first skin laminate preform 110 and the second skin laminate preform 118, for example, are heated under pressure to consolidate together.

In some embodiments, one or more finishing operations may be performed following the formation step 1008 or 1418. Examples of these finishing operations include, but are not limited to, a finish machining operation and a coating operation.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An apparatus for rotational equipment, comprising:
a rotor blade (26) including an airfoil body (36), a spar structure (38) and a cuff (40);
the airfoil body (36) extending spanwise from a base (44) to a tip (46), the airfoil body (36) extending longitudinally from a leading edge (50) to a trailing edge (52), the airfoil body (36) extending laterally between a first side (54) and a second side (56);
the spar structure (38) extending spanwise within and supporting the airfoil body (36);
and
the cuff (40) projecting out from the spar structure (38) and away from the base (44) of the airfoil body (36), the cuff (40) formed integral with the spar structure (38), and the cuff (40) and the spar structure (38) comprising thermoplastic material.

2. The apparatus of claim 1, further comprising:
a rotor hub (24) comprising a mount (30);
the cuff (40) fastened to the mount (30) and attaching the rotor blade (26) to the rotor hub (24).

3. The apparatus of claim 1 or 2, wherein the cuff (40) includes a first flange (86A) and a second flange (86B) laterally separated from the first flange (86A) by a channel (90), optionally wherein:
a first aperture (88A) extends laterally through the first flange (86A); and
a second aperture (88B) extends laterally through the second flange (86B) and is coaxial with the first aperture (88A).

4. The apparatus of any preceding claim, wherein the thermoplastic material includes a thermoplastic matrix (82) and fiber reinforcement (84) embedded within the thermoplastic matrix (82), optionally wherein the fiber reinforcement (84) comprises a plurality of fibers (94) and each of the plurality of fibers (94) extends within the spar structure (38) and the cuff (40).

5. The apparatus of any preceding claim, wherein the spar structure (38) includes
a first spar (66A) within the airfoil body (36) and extending spanwise along the first side (54);
a second spar (66B) within the airfoil body (36) and extending spanwise along the second side (56); and
a web (68) extending laterally between and connected to the first spar (66A) and the second spar (66B).

6. The apparatus of claim 5, wherein the airfoil body (36) includes
a first side skin (58A) forming the first side (54) and connected to the first spar (66A);
a second side skin (58B) forming the second side (56) and connected to the second spar (66B), the second skin (58) meeting the first skin (58) at the trailing edge (52); and
a leading edge skin (58C) forming the leading edge (50) and extending between the first side skin (58A) and the second side skin (58B).

7. The apparatus of claim 6, wherein:
the first side skin (58A) is formed integral with the first spar (66A) and the second side skin (58B) is formed integral with the second spar (66B); or
the first side skin (58A) is connected to the first spar (66A) at a first splice joint and the second side skin (58B) is connected to the second spar (66B) at a second splice joint.

8. The apparatus of claim 6 or 7, wherein
the first spar (66A) comprises a first thermoplastic material; and
the first side skin (58A) comprises a second thermoplastic material with a lower melting point than the first thermoplastic material.

9. The apparatus of any of claims 6 to 8, wherein:
the leading edge skin (58C) is fused to the first spar (66A) and the second spar (66B); or
the leading edge skin (58C) is connected to the first spar (66A) at a first splice joint, and the leading edge skin (58C) is connected to the second spar (66B) at a second splice joint.

10. The apparatus of any preceding claim, wherein:
the airfoil body (36) comprises thermoplastic material and the spar structure (38) is fused to the airfoil body (36); and/or
the apparatus further comprises a guard (96) on the airfoil body (36) at the leading edge (50).

11. A formation method, comprising:
providing a preform (104) of thermoplastic material;
thermoforming the preform (104) of thermoplastic material to form a spar structure (38) and a cuff (40) integral with the spar structure (38); and
forming an airfoil body (36) that extend spanwise from a base (44) to a tip (46), longitudinally from a leading edge (50) to a trailing edge (52) and laterally between a first side (54) and a second side (56), the forming comprising
consolidating a first side skin (58A), a second side skin (58B) and a leading edge skin (58C) with the spar structure (38), the first side skin (58A) at least partially forming the first side (54), the second side skin (58B) at least partially forming the second side (56), and the leading edge skin (58C) at least partially forming the leading edge (50); and
consolidating the first side skin (58A) with the second side skin (58B) at the trailing edge (52).

12. The formation method of claim 11, wherein the spar structure (38) includes
a first spar (66A) within the airfoil body (36) at the first side (54);
a second spar (66B) within the airfoil body (36) at the second side (56); and
a web (68) extending laterally between and connected to the first spar (66A) and the second spar (66B).

13. The formation method of claim 12, further comprising:
arranging a support tool (106) adjacent the web (68) and laterally between the first spar (66A) and the second spar (66B), the support tool (106) comprising one or more inflatable bladders (108);
supporting the spar structure (38) during the consolidating with the support tool (106);
and
removing the support tool (106) after the forming of the airfoil body (36).

14. A formation method, comprising:
forming a rotor blade (26) that includes an airfoil body (36) and a spar structure (38), the airfoil body (36) extending spanwise from a base (44) to a tip (46), the airfoil body (36) extending longitudinally from a leading edge (50) to a trailing edge (52), the airfoil body (36) extending laterally between a first side (54) and a second side (56), and the spar structure (38) extending spanwise within and supporting the airfoil body (36);
the forming of the rotor blade (26) comprising
arranging a plurality of plies of thermoplastic material together to provide a laminate preform (104);
pinning the laminate preform (104) to a first tool (112); and
consolidating the laminate preform (104) to form an element of the rotor blade (26), the consolidating comprising heating the laminate preform (104) and pressing the heated laminate preform (104) between the first tool (112) and a second tool (116), wherein at least a first of the plurality of plies of thermoplastic material slips relative to a second of the plurality of plies of thermoplastic material during the pressing.

15. The formation method of claim 14, wherein the rotor blade (26) further includes a cuff (40) formed integral with and projecting out from the spar structure (38).
